(19) Europäisches Patentamt
European Patent Office
Office européen des brevets

(11) **EP 1 968 156 B1**

(12) **EUROPÄISCHE PATENTSCHRIFT**

(45) Veröffentlichungstag und Bekanntmachung des Hinweises auf die Patenterteilung:
**30.04.2014 Patentblatt 2014/18**

(51) Int Cl.:
***H01Q 1/12*** *(2006.01)*     ***H01Q 1/32*** *(2006.01)*
***H04B 7/08*** *(2006.01)*

(21) Anmeldenummer: **08003623.9**

(22) Anmeldetag: **28.02.2008**

(54) **Antenne für den Rundfunk-Empfang mit Diversity-Funktion in einem Fahrzeug**

Aerial for receiving radio signals with diversity function in a vehicle

Antenne pour la réception radio dotée d'une fonction de diversité dans un véhicule

(84) Benannte Vertragsstaaten:
**DE FR IT**

(30) Priorität: **09.03.2007 DE 102007011636**

(43) Veröffentlichungstag der Anmeldung:
**10.09.2008 Patentblatt 2008/37**

(73) Patentinhaber: **Delphi Delco Electronics Europe GmbH**
**42119 Wuppertal (DE)**

(72) Erfinder:
• **Lindenmeier, Heinz**
**82152 Planegg (DE)**
• **Lindenmeier, Stefan**
**82131 Gauting (DE)**
• **Reiter, Leopold**
**82205 Gilching (DE)**
• **Hopf, Jochen**
**85540 Haar (DE)**

(74) Vertreter: **Robert, Vincent et al**
**Delphi France SAS**
**Bât. le Raspail - ZAC Paris Nord 2**
**22, avenue des Nations**
**CS 65059 Villepinte**
**95972 Roissy CDG Cedex (FR)**

(56) Entgegenhaltungen:
EP-A- 1 763 151     WO-A-94/29926
WO-A-95/14354     DE-A1- 4 321 805
DE-A1- 4 443 596     US-A- 5 581 264

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft eine Antenne für den Rundfunk-Empfang, welche für den Empfang für Frequenzen oberhalb des Hochfrequenzbereichs in einer Kraftfahrzeugfensterscheibe 1 zusammen mit einem aufgedruckten Heizfeld, welches sich bis in die Nähe des oberen Fensterrands 12 erstreckt mit horizontal angeordneten Heizleitern 5 und mit an den seitlichen Rändern des Heizfeldes befindlichen Sammelschienen 4a,b zur Zuführung des Heizgleichstroms über hochfrequent isolierende Entkopplungsnetzwerke 17, angeordnet ist, wobei durch Anschluss an dieses Heizfeld über einen Leiter 7 zu einem Antennenanschlusskontakt 8b,8c,8d mindestens eine Antenne gebildet ist.

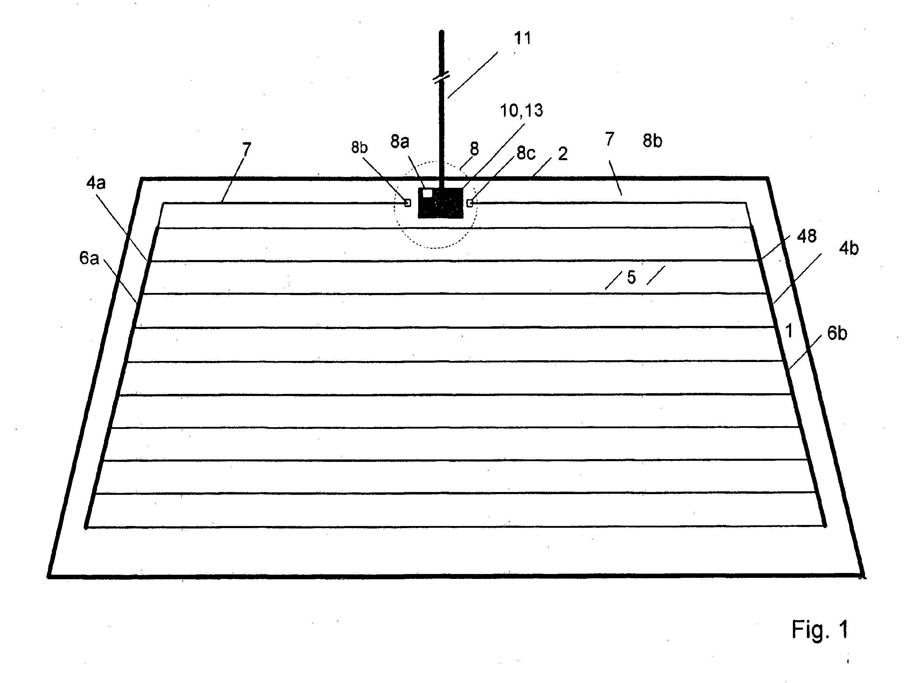

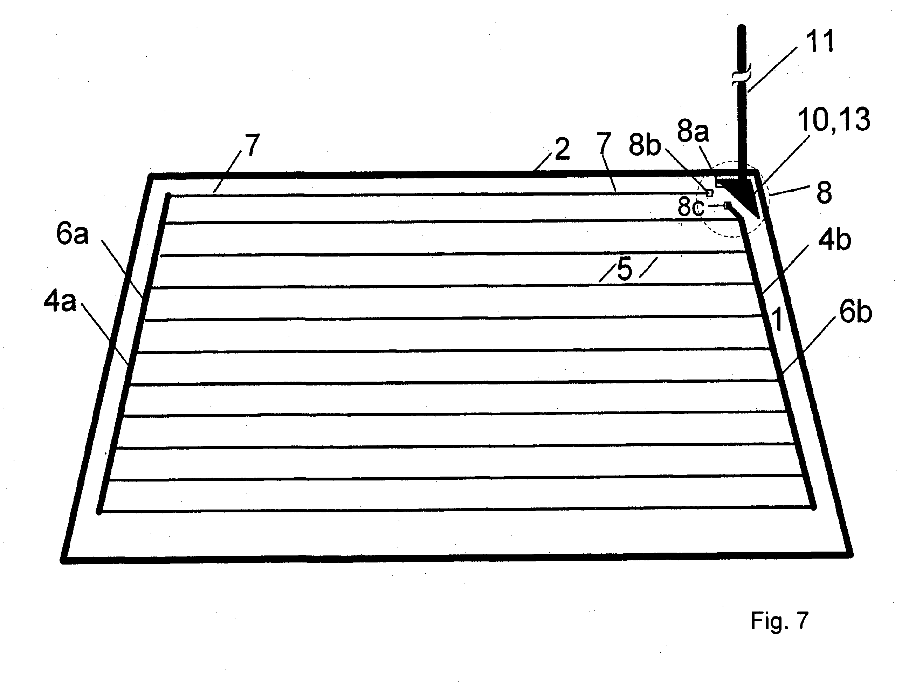

Antennen dieser Art sind bekannt z.B. aus DE 3618452.A1 und aus der Offenlegungsschrift DE 3719692 A1. Bei diesen Antennen wird das Heizfeld bzw. werden die Heizfelder auf einer Scheibe als Antennen für den Empfang von Signalen im Meterwellenbereich, das ist der Frequenzbereich oberhalb 30MHz, also oberhalb des Hochfrequenzbereichs mitbenutzt. Die Antennenanschlüsse zur Gestaltung von Diversity-Antennen befinden sich jeweils an den Sammelschienen und an einem dem Anschlusspunkt auf der Sammelschiene benachbarten Punkt des metallischen Rahmens, der die gesamte Fensterscheibe in Form der leitenden Karosserie im Allgemeinen umgibt. Hierbei wird die Möglichkeit genutzt, an verschiedenen Stellen der Sammelschienen und des Rahmens voneinander unterschiedliche Empfangssignale zur Weiterverarbeitung in einem Antennendiversitysystem abzugreifen. Die Antennenleiter und die Heizleiter sind im Fall eines Einscheibenglases auf das Glas gedruckte Leiter. Um die Möglichkeiten zu schaffen, durch elektrische Anschlüsse an das Heizfeld weitere Diversity-Antennen zu gestalten, wird in der DE 3914424 C2 vorgeschlagen, Antennenleiter zu bilden, welche zum Teil innerhalb des Heizfelds quer zu den Heizleitern geführt sind, mit denen die Antennenleiter an den Kreuzungspunkten niederohmig verbunden sind. Zur hochfrequenzmäßigen Entkopplung der Sammelschienen von dem Bordnetz, über das der Heizungsgleichstrom zugeführt wird, werden deshalb geeignete Entkopplungsnetzwerke verwendet, wie sie z.B. in DE 3618452, Fig. 7, Blöcke 6a, b, c, d und in DE 3719692 A1, Fig. 1, Blöcke 6a, b, c, d ersichtlich sind. Diese Entkopplungsnetzwerke sind für den Frequenzbereich hochohmig zu gestalten. Dies ist bei Frequenzen oberhalb des Hochfrequenzbereichs mit akzeptablen Kosten möglich. Bei niedrigeren Frequenzen ist die Hochohmigkeit solcher Entkopplungsnetzwerke aufgrund der großen Heizströme ausschließlich mit hohen Kosten und relativ großem Raumbedarf für diese Netzwerke zu erreichen.

Zur Gestaltung von Rundfunkantennen ist es notwendig, sowohl Frequenzbereiche oberhalb des Hochfrequenzbereichs (VHF, UHF) als auch die niedrigen Frequenzbereiche (LMK) abzudecken. In der Offenlegungsschrift DE 3719692 A1 und in der DE 3914424 C2 (Fig. 14) wird deshalb vorgeschlagen, in einem freien Bereich oberhalb des Heizfelds eine kostengünstige separate Struktur für den Empfang niedrigerer Frequenzen (LMK) vorzusehen.

Diese bekannten Antennen besitzen den Nachteil, dass zur Gestaltung einer separaten Struktur für den Empfang niedrigerer Frequenzen (LMK) ein hinreichend großer freier Bereich oberhalb des Heizfelds notwendig ist, um eine zufrieden stellende Funktion der Antenne zu erreichen. Insbesondere bei Fahrzeugen der unteren Preisklassen besteht das besondere Problem, dass das Heizfeld praktisch die gesamte Fläche des Fensters bedeckt und zusätzlich die Fensteröffnung häufig sehr klein ist. Dies erschwert zusätzlich die Gestaltung einer zufrieden stellenden Diversity-Funktion mit ausreichender Diversity-Effizienz. Zusätzlich ist man in dieser Fahrzeugklasse auf besonders niedrige Kosten angewiesen.

Aus der US 5 581 264 A ist eine Diversity-Antennenanordnung für den Rundfunk-Empfang unter Verwendung eines Empfängers bekannt, welche die Merkmale des Oberbegriffs des Anspruchs 1 aufweist.

Die WO 95/14354 A offenbart eine Funkantennen-Anordnung für den Dezimeterwellenbereich auf einem Kraftfahrzeug.

Aus der WO 94/29926 A ist eine Funkantennen-Anordnung auf der Fensterscheibe eines Kraftfahrzeugs bekannt.

Aufgabe der Erfindung ist es deshalb, bei einer Antenne der gattungsgemäßen Art insbesondere kostengünstig den Empfang von niedrigen Rundfunkfrequenzen (LMK) bei gleichzeitig guter Diversity-Funktion oberhalb des Hochfrequenzbereichs (VHF...) zu erreichen.

Diese Aufgabe wird erfindungsgemäß durch die im kennzeichnenden Teil des Hauptanspruchs angegebenen Merkmale gelöst.

Ausführungsbeispiele der Erfindung sind in den Zeichnungen dargestellt und werden im Folgenden näher beschrieben. Im Einzelnen zeigt:

Fig. 1: Antenne nach der Erfindung mit Antennen für den Frequenzbereich oberhalb des Hochfrequenzbereichs durch Anschlüsse an die Sammelschienen 4a, 4b des Heizfelds mit Zuleitungen über Leiter 7 zu den Antennenanschlusskontakten 8b, 8c sowie einer auf der Fensterscheibe 1 des Fahrzeugs befindlichen Stabantenne 11 mit flächig leitfähigem Antennenfußpunkt 13, mit kapazitiver Durchkopplung 10 und Antennenanschlusskontakt 8a. Alle Antennenanschlusskontakte 8a, 8b, 8c sind räumlich zu einer Antennenanschlussstelle 8 zusammengefasst.

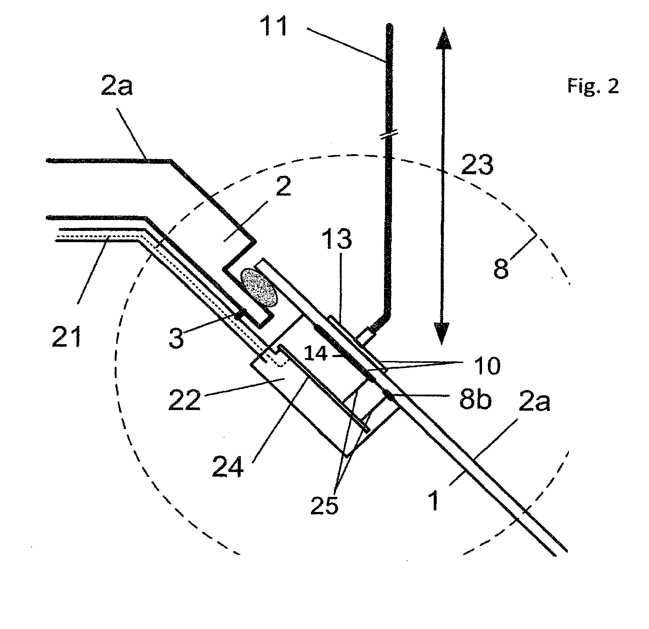

Fig. 2: Antenne nach der Erfindung wie in Fig. 1 mit einem auf der Innenseite der Fensterscheibe befestigten Antennenmodul 22 mit leitenden Verbindungen 25 von den Antennenanschlusskontakten 8a, 8b, 8c zu den für die Signalverstärkung in beiden Frequenzbereichen und für die Antennen-Diversity-Funktion notwendigen elektronischen Komponenten, die beispielhaft auf einer Leiterplatte 24 untergebracht sind. Ausgangsseitig erfolgt die Übertragung von HF- und ZF-Signalen über die geschirmte HF-Leitung 21 Der Masseanschluss 3 ist über den Außenleiter der HF-Leitung 21 gegeben.

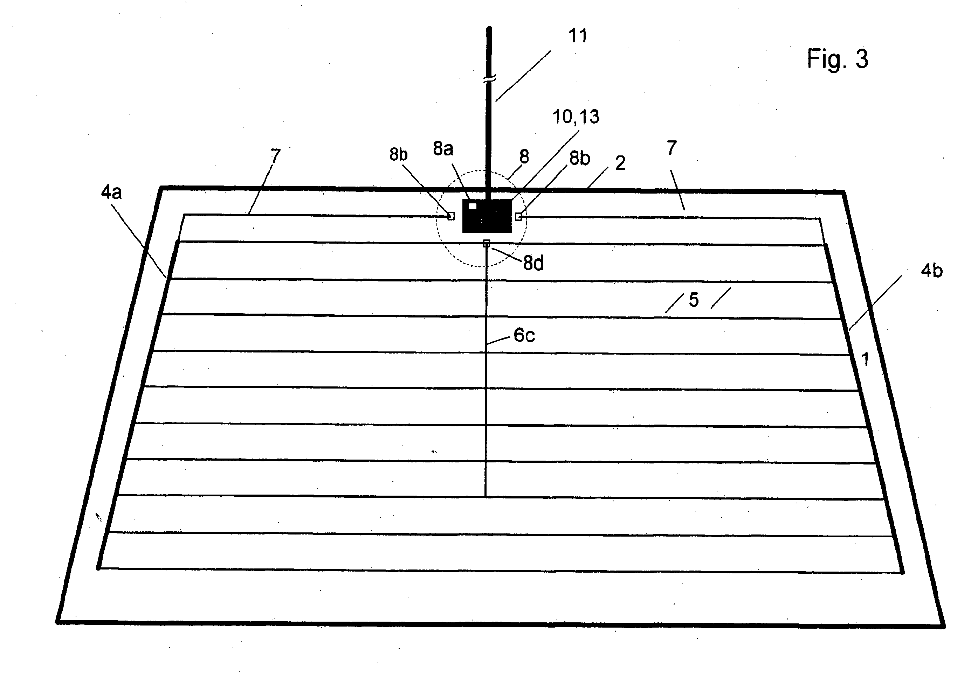

Fig. 3: Antenne nach der Erfindung wie in Fig. 1, jedoch mit einem zusätzlichen, quer zu den Heizleitern 5 geführten und an den Kreuzungspunkten mit den Heizleitern 5 verbundenen Antennenleiter 6c mit einem Antennenanschlusskontakt 8d innerhalb des geometrischen Bereichs der Antennenanschlussstelle 8 .

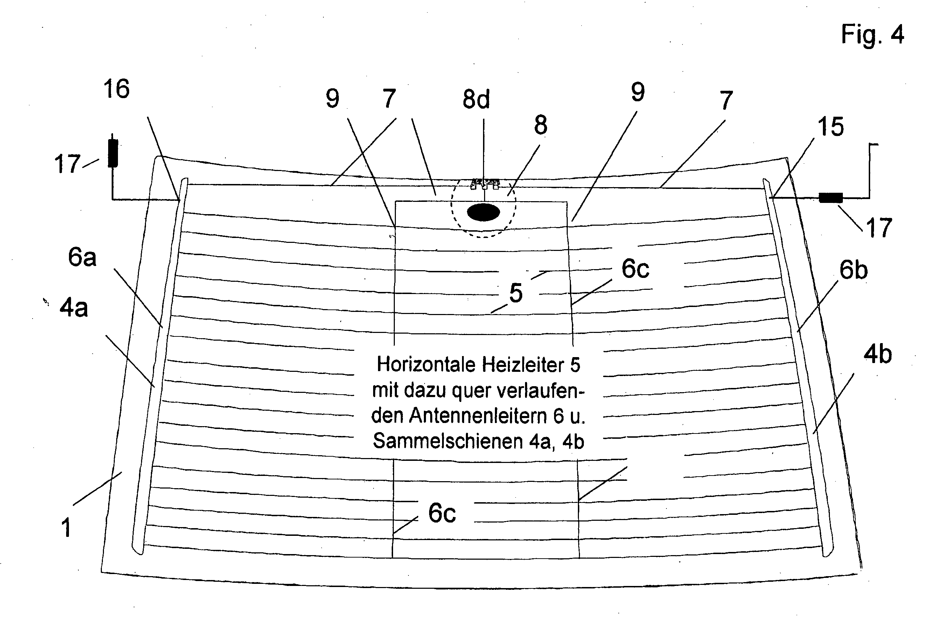

Fig. 4: Antennenkonfiguration wie in Figur 3, jedoch mit zwei zueinander parallelen, quer zu den Heizleitern 5 geführten Antennenleitern 6c, welche über Leiter 7 vom Anschlusspunkt 9 zum Antennenanschlusskontakt 8d zusammengeführt sind.

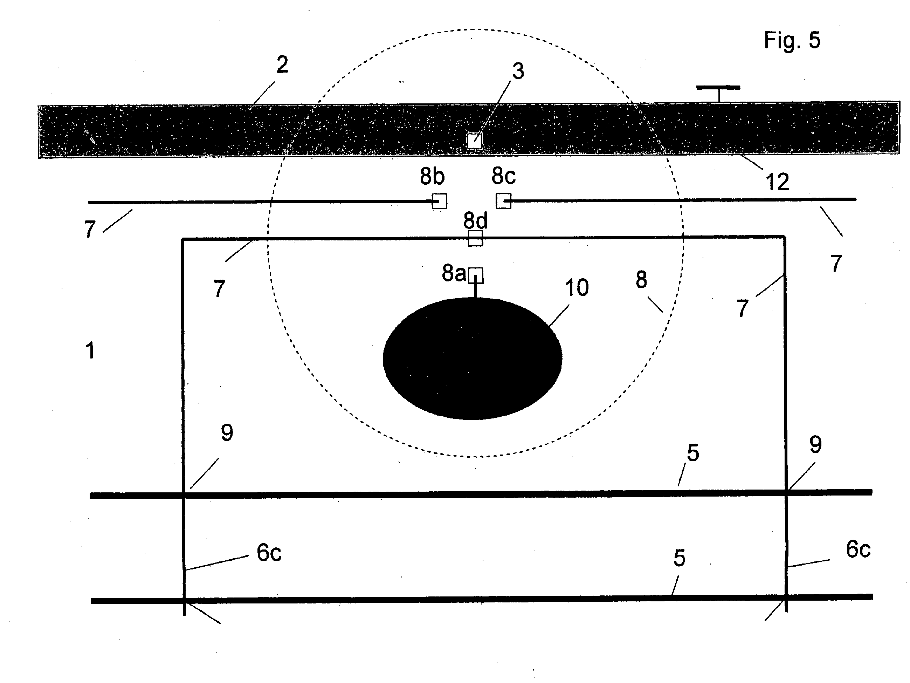

Fig. 5: Antennenkonfiguration wie in Figur 4, mit Darstellung des an die kapazitive Durchkopplung 10 angeschlossenen Antennenanschlusskontakts 8a der Stabantenne 11 und des Masseanschlusses 3 an der leitenden Fahrzeugkarosserie 2. Alle Antennenanschlusskontakte 8a, 8b, 8c, 8d befinden sich innerhalb des geometrischen Bereichs der Antennenanschlussstelle 8.

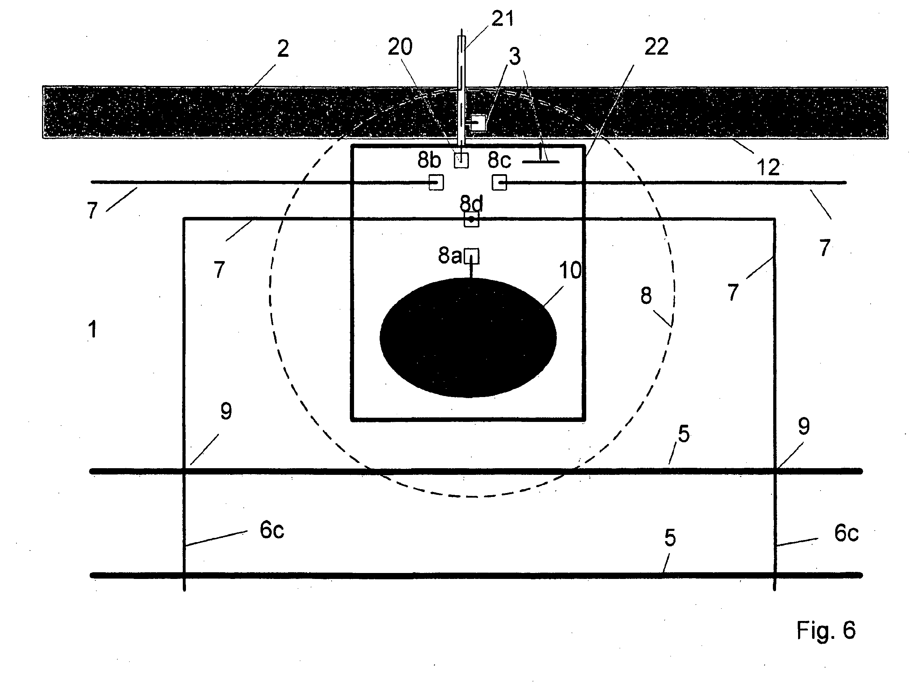

Fig. 6: Antennenkonfiguration wie in Figur 5, mit dargestelltem Antennenmodul 22 und Masseanschluss 3 innerhalb des geometrischen Bereichs der Antennenanschlussstelle 8.

Fig. 7: Konfiguration einer Antenne nach der Erfindung mit Antennenanschlussstelle 8 und Stabantenne 11 mit kapazitiver Durchkopplung 10 in der Nähe einer oberen Ecke der Fensterscheibe.

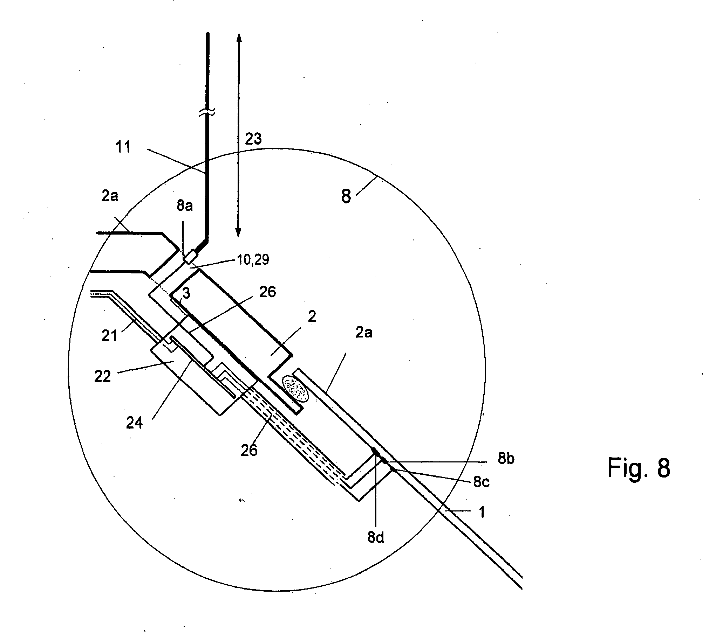

Fig. 8: Antenne nach der Erfindung mit einer auf dem Fahrzeugdach 2 angebrachten Stabantenne 11 mit Antennenanschlusskontakt 8a im Antennenfußpunkt und Lochdurchkopplung 29 mit Verbindungsleitung 26 zum Antennenmodul 22 auf der Innenseite der leitenden Fahrzeugkarosserie 2 und mit Verbindungsleitungen 26 zu den weiteren auf der Fensterscheibe 1 befindlichen Antennenanschlusskontakten 8b, 8c, 8d.

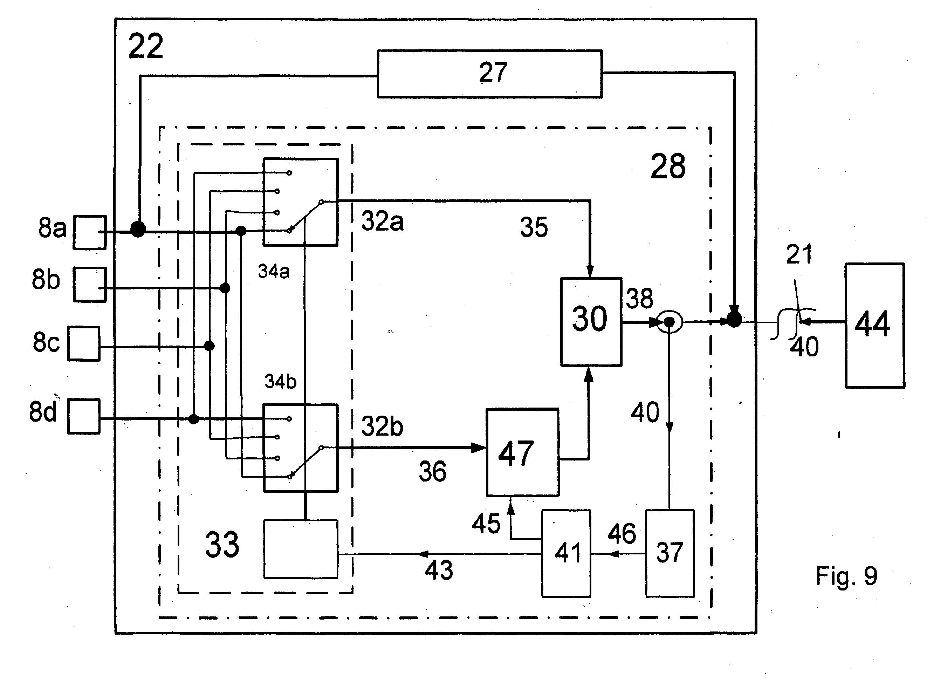

Fig. 9: Antennenmodul 22 mit Antennen-Diversity-Block 28 für Frequenzen oberhalb des Hochfrequenzbereichs mit Aufzweigung des eingangsseitigen Signalpfads in zwei separate Signalpfade 35, 36 mit eingangsseitigen Auswahlschaltern 34a, 34b und über eine einstellbare Phasendreheinrichtung 47 gephaste Überlagerung der Empfangssignale 32a, b im Summationsglied 30 zur Erhöhung der Diversity Effizienz im Ausgangssignal 38. Die Ansteuerung erfolgt durch den Diversityprozessor 37 in Verbindung mit der elektronischen Steuereinrichtung mit Speicher 41 und dem adressierbaren Signalwahlschalter 33. Empfangssignale der Stabantenne 11 am Antennenanschlusskontakt 8a im niedrigen Frequenzbereich werden über den Übertragungsweg für LMK-Signale 27 zur geschirmten HF-Leitung 21 übertragen.

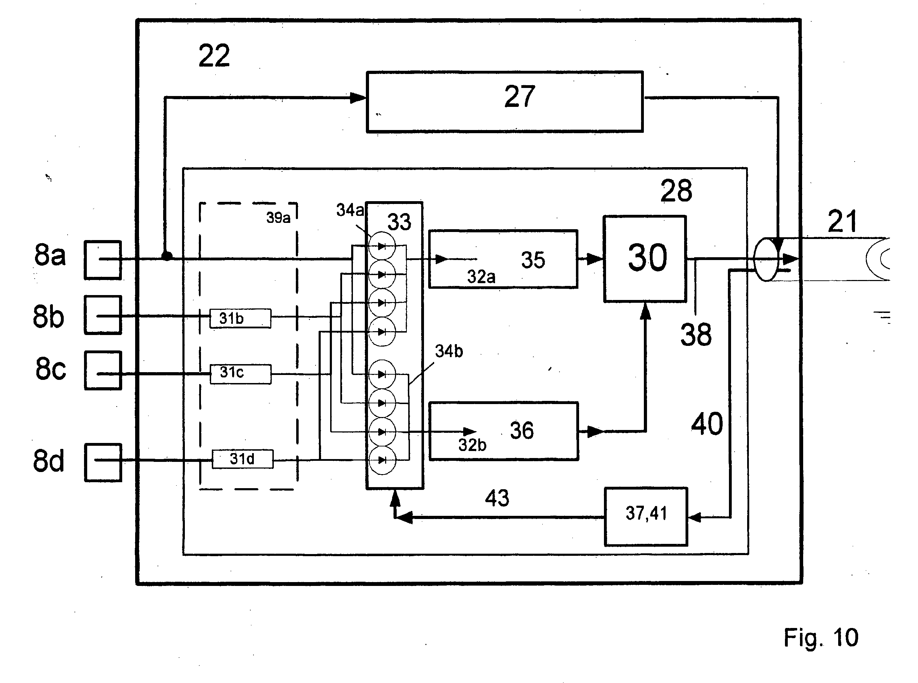

Fig. 10: Antennenmodul 22 wie in Fig. 9 jedoch mit fest eingestellten Phasendrehgliedern 31b, 31c, 31d im eingangsseitigen Signalpfad 39a zur Drehung des Phasenwinkels eines Antennensignals in der Zuleitung zum adressierbaren logischen Signalwahlschalter 33 zur Erhöhung der Diversity-Effizienz.

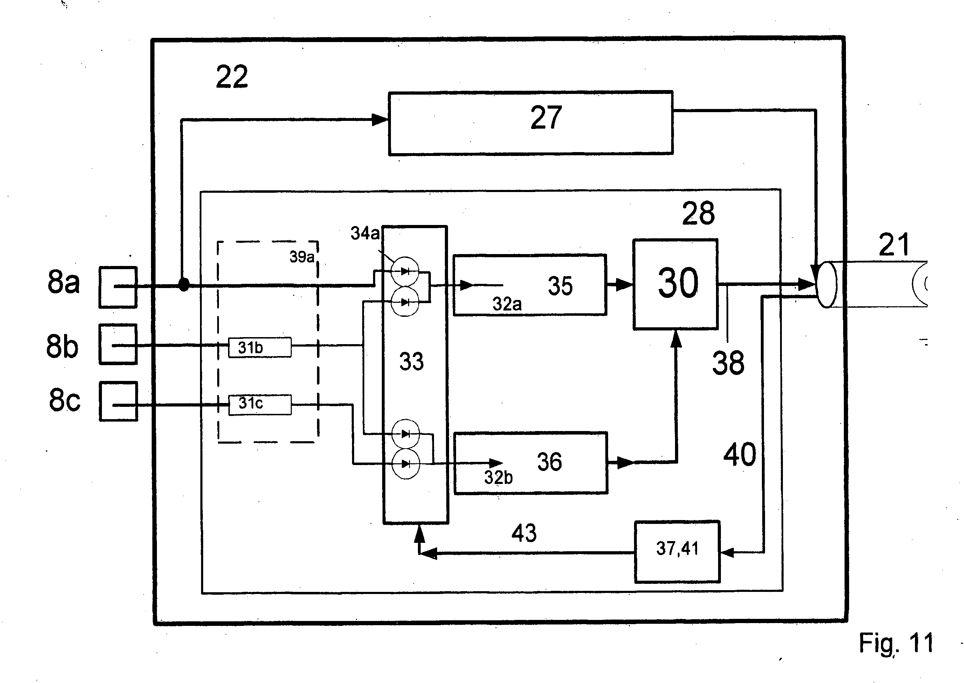

Fig. 11: Antennenmodul 22 wie in Fig. 9 jedoch für nur 3 Antennenanschlusskontakte 8a, 8b, 8c und zwei fest eingestellten Phasendrehgliedern 31b, 31 c im eingangsseitigen Signalpfad 39a zur Drehung des Phasenwinkels eines Antennensignals in der Zuleitung zum adressierbaren logischen Signalwahlschalter 33 zur Erhöhung der Diversity-Effizienz.

Fig. 12:

a) dreidimensionale Darstellung des Zuwachses an Diversity Effizienz bezogen auf die Diversity-Effizienz ohne Summation der gephasten Signale in Abhängigkeit von den Phasen werten $P_b$ und $P_c$ mit deutlichem Maximum bei geeigneter Wahl der Phasenwerte.
b)

1: Diversity Effizienz in Abhängigkeit vom Winkel Pc bei fest eingestelltem Winkel Pb = 145 Grad
2: Diversity Effizienz in Abhängigkeit vom Winkel Pb bei fest eingestelltem Winkel Pc = 100 Grad
maximaler Zugewinn: $\Delta n_{max}$ = 1,3 mit Pb = 145 Grad und Pc = 100 Grad

Antennen für den AM-FM-Rundfunkempfang in Fahrzeugen mit Antennen-Diversity für den UKW-Frequenzbereich sind seit vielen Jahren bekannt, haben sich jedoch bisher nur für die Fahrzeuge der höheren Preisklasse durchgesetzt. Solche Fahrzeuge haben aufgrund ihrer Größe in der Regel Heckfensterscheiben mit großen Abmessungen, die es erlauben, oberhalb des Heizfelds eine abgesetzte Struktur für den Empfang im niedrigeren LMK-Frequenzbereich und somit eine preisgünstige Antenne für diesen Frequenzbereich zu gestalten. Im Gegensatz hierzu konnte sich die Diversity-Technik bei den Rundfunk Antennen für kleinere Fahrzeuge in der Hauptsache deshalb nicht durchsetzen, weil das Heizfeld nicht auf kostengünstige Weise für den LMK-Empfang herangezogen werden kann. Vielfach wurden Antennen-Diversity Systeme mit mehreren dezentral angeordneten Antennenmodulen geschaffen, womit ein großer Aufwand an HF-Leitungen und Steckverbindungen einhergeht. Die vorliegende Erfindung zielt deshalb in der Hauptsache darauf ab, eine leistungsfähige und dennoch kostengünstige AM-FM-Rundfunkempfangsantenne mit Antennen-Diversity-Funktion in Fahrzeugen für den UKW-Frequenzbereich zu gestalten. Im Automobilbau hat sich gezeigt, dass sich hohe Kosten insbesondere über die Anzahl von Modulen, welche an unterschiedlichen Montageorten angebracht werden müssen sowie über den notwendigen Kabelaufwand mit den dazugehörigen Steckverbindungen ergeben. Im Gegensatz hierzu führt ein höherer Aufwand an elektronischen Mitteln insbesondere bei großen Stückzahlen zu verhältnismäßig geringen Kosten. Mit der vorliegenden Erfindung ist der Vorteil verbunden, dass eine leistungsfähige Antenne für den AM-FM-Rundfunkempfang in Fahrzeugen mit Antennen-Diversity mit einem minimalen Aufwand an mechanischen Komponenten preisgünstig gestaltet werden kann und somit für die Anwendung auch in kleinen Fahrzeugen geeignet ist.

Ein wesentliches Merkmal der vorliegenden Erfindung ist die Anwendung einer einfachen Stabantenne 11 mit ihrem Antennenanschlusskontakt 8a im Antennenfußpunkt in der Nähe des oberen Fensterrands und die Zusammenführung aller Antennensignale in den räumlichen Bereich des mit Antennenanschlussstelle 8 bezeichneten Gebiets in dem alle Antennenanschlusskontakte 8a, 8b, 8c, 8d der einzelnen Diversity-Antennen gestaltet sind. Erfindungsgemäß liegt somit der Fußpunkt der Stabantenne 11 im räumlichen Bereich der Antennenanschlussstelle 8 und die aus den Anschlüssen aus dem Heizfeld gewonnenen Signale des UKW-Bereichs werden über Leiter 7 zu den auf der Fensterscheibe befindlichen Antennenanschlusskontakten 8b, 8c, 8d innerhalb des räumlichen Bereichs der Antennenanschlussstelle 8 in die Nähe des Fußpunkts der Stabantenne geführt. Erfindungsgemäß wird ferner gefordert, dass das Antennenmodul 22, in welchem sämtliche für die Signalverstärkung in beiden Frequenzbereichen und für die Antennen-Diversity-Funktion notwendigen elektronischen Komponenten enthalten sind, ebenfalls innerhalb des Bereichs der Antennenanschlussstelle 8 angebracht ist. Durch die erfindungsgemäße Forderung, die geometrische Ausdehnung dieser Antennenanschlussstelle 8 kleiner als 1/15 der Wellenlänge im UKW-Bereich zu wählen, ergeben sich Zuleitungen zwischen den Antennenanschlusskontakten 8a, 8b, 8c, 8d und dem Antennenmodul 22, welche so kurz sind im Vergleich zur Wellenlänge für Frequenzen oberhalb des Hochfrequenzbereichs (UKW-Frequenzen), dass ihre kleine Frequenzabhängigkeit in die Gestaltung der im Antennenmodul 22 befindlichen Verstärker mit einbezogen werden kann und elektronische Bauelemente außerhalb des Antennenmoduls 22 erfindungsgemäß nicht eingesetzt werden. Dies ist ein wesentlicher Beitrag zur Gestaltung einer kostengünstigen Rundfunkantenne mit Diversity-Funktion, welche für den Einsatz in Fahrzeugen der niedrigen Preisklasse in Betracht gezogen werden kann.

Im Folgenden werden vorteilhafte Ausgestaltungen der Erfindung anhand der Figuren der erläutert.

Bei einigen besonders günstigen Bauformen von Antennen nach der Erfindung ist die Stabantenne 11 wie in der Draufsicht in Figur 1 auf der Fensterscheibe 1 angebracht und ihr Empfangssignal wird über einen flächig leitfähigen Antennenfußpunkt 13 zu einer auf der Innenseite der Fensterscheibe 1 angebrachten kapazitiven Gegenfläche 14 mit Antennenanschlusskontakt 8a auf an sich bekannte Weise kapazitiv gekoppelt. Durch Anschluss eines Leiters 7 an das obere Ende einer Sammelschiene 4a,b und durch Führung dieses Leiters 7 parallel und möglichst nahe zum leitenden oberen Fensterrand zum Antennenanschlusskontakt 8b,8c im Bereich der Antennenanschlussstelle 8 ist das Antennen-Richtdiagramm des an der Sammelschiene 4a,b bestehenden Signals am Antennenanschlusskontakt 8b,8c verfügbar. Aufgrund der unterschiedlichen Positionen der beiden Sammelschienen 4a, b im Fahrzeug sind somit die an den Antennenanschlusskontakten 8b, 8c vorliegenden Antennen-Richtdiagramme unterschiedlich und können für die Diversity-Funktion verwendet werden. Deutlich unterschiedlich von den Antennen-Richtdiagrammen der beiden Sammelschienen 4a, b ist das Richtdiagramm der Stabantenne 11 am Antennenanschlusskontakt 8a.

Aus der Seitenansicht der Anordnung in Figur 2 ist der vernachlässigbare Aufwand an Leitungen ersichtlich, welcher zur Realisierung einer erfindungsgemäßen Antenne für den Rundfunk-Empfang mit Diversity-Funktion nötig ist. Dies setzt jedoch voraus, dass man von den bekannten Maßnahmen der mehrfachen Nutzung der geschirmten HF-Leitung 21 Gebrauch macht und sowohl die für die Diversity-Funktion notwendigen Signale zwischen dem Empfänger 44 und dem Antennenmodul 22 sowie den Gleichstrom für den Betrieb des Moduls über diese geschirmte HF-Leitung 21 führt. Neuere Entwicklungen elektronischer Module solcher Anwendungen besitzen einen hohen Grad an Miniaturisierung, so dass das Antennenmodul 22 ohne wesentliche Bedeckung der Fensterscheibe im Bereich des Schwarzdrucks angebracht werden kann. Die Stabantenne 11 kann beispielhaft in einfacher Ausführung als Stahlstab mit einer Stablänge 23 zwischen 20 und 40 cm ausgeführt werden. Die für die kapazitive Durchkopplung 10 benötigte Fläche beträgt etwa 6 - 8 cm$^2$ und ist auch für kleine Fensterscheiben akzeptabel. Der Masseanschluss 3 zur leitenden Fahrzeugkarosserie 2 kann zum Beispiel auf einfache Weise mit Hilfe einer Kabelschelle innerhalb des Bereichs der Antennenanschlussstelle 8 erfolgen. Ebenso erfolgreich kann ein geometrisch klein gestaltetes Antennenmodul 22 am metallischen Rahmen des Fensters befestigt werden, womit zusätzlich der Masseanschluss 3 gestaltet werden kann. Eine Mehrfachleitung für eine Steckverbindung an einem Ende kann zum Beispiel auf einem Kaptonband gedruckt mit den auf der Fensterscheibe befindlichen Antennenanschlusskontakten 8a, 8b, 8c, 8d fest verbunden sein. Die Steckverbindung wird bei der Montage des Antennenmoduls 22 geschlossen.

Die Anbringung der Stabantenne 11 in der horizontalen Mitte der Fensterscheibe, wie in den Figuren 1 bis 3 dargestellt, erlaubt es, die Diversity-Effizienz durch Einführung eines weiteren Antennenleiters (erste Leiterteile) 6c, welcher quer zu den Heizleitern 5 geführt ist und an den Kreuzungspunkten mit den Heizleitern 5 verbunden ist, zur Gestaltung einer weiteren Diversity-Antenne mit Antennenanschlusskontakt 8d anzuheben. Mit dem Antennenanschlusskontakt 8a, 8b, 8c, 8d stehen somit auf besonders einfache und kostengünstige Weise 4 Diversity-Antennen mit unterschiedlichen Richtdiagrammen und einer entsprechend hohen Diversity-Effizienz zur Verfügung.

Zur Verbesserung der Antenneneigenschaften der durch den Antennenleiter 6c gestalteten Antenne in Figur 3 zeigt es sich häufig als vorteilhaft, wie in Figur 4 dargestellt, zwei zueinander parallele, quer zu den Heizleitern 5 geführte Antennenleiter 6c zu gestalten, welche über Leiter 7 vom Anschlusspunkt 9 zum Antennenanschlusskontakt 8d zusammengeführt sind. In dieser Figur sind die Entkopplungsnetzwerke 17 dargestellt, welche zur hochfrequenzmäßigen Isolation der Sammelschienen 4a, b im UKW-Bereich und ggfs. TV-Bereich zur Zuführung des Heizstroms an den Sammelschienenanschlüssen 15, 16 in der Regel notwendig sind. In Figur 5 ist eine detaillierte Darstellung der Antennenkonfiguration wie in Figur 4 gegeben mit Darstellung des an die kapazitive Durchkopplung 10 angeschlossenen Antennenanschlusskontakts 8a der Stabantenne 11 und des Masseanschlusses 3 an der leitenden Fahzeugkarosserie 2. Alle Antennenanschlusskontakte 8a, 8b, 8c, 8d befinden sich innerhalb des geometrischen Bereichs der Antennenanschlussstelle 8. In Figur 6 ist beispielhaft die Anbringung des Antennenmoduls 22 dargestellt, mit der am Ausgangsanschluss 20 angeschlossenen, geschirmten HF-Leitung 21 mit dem am Masseanschluss 3 geerdeten Schirm.

In Figur 7 ist die Stabantenne 11 beispielhaft in der Nähe einer oberen Ecke auf der Fensterscheibe mit der kapazitiven Durchkopplung 10 positioniert. Neben der Stabantenne 11 sind die beiden Sammelschienen 4a, b als Diversity-Antennen verwendet. Das Signal der Sammelschienen 4a ist über den parallel zum leitenden Fensterrand geführten Leiter 7 zur Antennenanschlussstelle 8 geleitet. Eine längere Zuleitung vom oberen Ende der Sammelschiene 4b zur Antennenanschlussstelle 8 kann vorteilhaft entfallen.

In Figur 8 ist die Stabantenne 11 mit ihrem Antennenanschlusskontakt 8a im Fußpunkt auf der leitenden Fahrzeugaussenhaut 2a angebracht. Über eine einfache Lochdurchkopplung 29 wird das Empfangssignal zum Antennenmodul 22 im Inneren des Fahrzeugs geleitet. Zur Zuleitung der auf der Fensterscheibe befindlichen Antennensignale kann eine mehrfache Verbindungsleitung 26 verwendet sein, welche an die Antennenanschlusskontakte 8b, 8c, 8d auf der Fensterscheibe angelötet ist. Die in der Praxis unvermeidliche Steckverbindung zwischen dieser Leitung und dem Antennenmodul 22 sowie der unvermeidlichen Steckverbindung für den Anschluss der Stabantenne 11 lassen jedoch die vorher genannten Lösungen mit dem Antennenmodul 22 und der Stabantenne 11 auf der Fensterscheibe kostengünstiger erscheinen.

Als Maß für die Leistungsfähigkeit einer Antennen-Diversity-Anlage dient die Diversity-Effizienz, welche der Anzahl der fiktiv verfügbaren dekorrelierten Empfangssignale entspricht. Die Verbesserung des Empfangs im von Mehrwegeausbreitung durch Signaleinbrüche (Fadings) gestörten Rayleigh-Empfangsfeld ergibt sich aus der Reduktion der Störungen, welche im UKW Bereich vielfach durch Nachbarkanäle und Gleichkanäle, sowie in Schwachsignalgebieten durch Rauschen verursacht werden. Ist $p_s$ die Wahrscheinlichkeit für das Auftreten einer Störung beim Empfang mit nur einer Antenne in einem Empfangsgebiet, so ist die Wahrscheinlichkeit für das Auftreten einer Störung im Diversity-Betrieb in demselben Empfangsgebiet reduziert auf

$$p_d = p_s^n$$

wobei n die charakteristische Größe der Diversity-Effizienz der Anlage bedeutet. Dieser Bezugswert dient im Folgenden zur Beschreibung der Leistungsfähigkeit der Diversity-Antennenanlage. Mit der vorliegenden Erfindung wird somit das Ziel verfolgt, mit möglichst kleinem Aufwand an Technik eine möglichst große Diversity-Effizienz zu erzielen.

Die Unterschiedlichkeit von Antennen-Richtdiagrammen unterschiedlicher Antennen ergibt sich unter anderem aus dem Wegunterschied, der sich bei den verschiedenen Antennen aufgrund ihrer unterschiedlichen Positionen abhängig vom Einfallswinkel der elektromagnetischen Wellen ergibt. Naturgemäß ist dieser Wegunterschied bei Fenstern mit kleinen Abmessungen entsprechend kleiner als bei größeren Fenstern. Somit ist es insbesondere bei kleinen Fenstern und bei begrenzter Anzahl der vorhandenen Diversity-Antennen wünschenswert, die Diversity-Effizienz über den bei ausschließlicher Verfügbarkeit der Antennensignale auftretenden Wert zu verbessern. Eine Verbesserung kann durch die Summation von jeweils mindestens zwei ausgewählten Antennensignalen erfolgen, wobei eines der Signale vor der Summation jeweils einer Phasendrehung unterworfen ist. Dies bewirkt, dass durch die damit verbundene Änderung des Richtdiagramms des Summensignals das Verhältnis von Nutzkanalsignal/Nachbarkanalstörsignal abhängig vom eingestellten Phasenwinkel verändert wird. Hierbei zeigt sich der überraschende Effekt, dass eine diskrete Unterteilung des Winkelraums von $2\pi$ für die zur Verfügungstellung unterschiedlich gephaster überlagerter Signale über eine begrenzte Anzahl hinaus keine weitere Verbesserung bewirkt. Insbesondere bei den häufig auftretenden Gleichkanal- oder Nachbarkanalstörungen sucht ein entsprechend auf Störungsminimierung ausgelegtes Diversitysystem eine Phaseneinstellung aus, die das maximale Signal-Störverhältnis liefert.

Zur Verbesserung der Diversity-Effizienz bei einer Antenne nach der vorliegenden Erfindung wird deshalb beispielsweise ein Antennenmodul 22 gemäß Figur 9 vorgeschlagen. Durch Aufzweigung des eingangsseitigen Signalpfads sind zwei separate Signalpfade 35, 36 mit eingangsseitigen Auswahlschaltern 34a, 34b geschaffen, wobei über eine einstellbare Phasendreheinrichtung 47 in einem der beiden Signalpfade, z.B. in Signalpfad 36, die gephaste Überlagerung der Empfangssignale 32a, b im Summationsglied 30 eine Erhöhung der Diversity- Effizienz im Ausgangssignal 38 bewirkt ist. Die Ansteuerung erfolgt durch den Diversityprozessor 37, dem die Empfangssignale in Form des FM-ZF-Signals 40 aus dem Empfänger 44 zugeführt sind in Verbindung mit der elektronischen Steuereinrichtung mit Speicher 41 und dem adressierbaren Signalwahlschalter 33. Ein solches System kann so ausgestaltet werden, dass es bei einem begrenzten Wertevorrat von Einstellungen der Phasendreheinrichtung 47 das maximal verfügbare Signal-Störverhältnis im Summensignal 38 liefert. Empfangssignale der Stabantenne 11 am Antennenanschlusskontakt 8a im niedrigen Frequenzbereich werden über den Übertragungsweg für LMK-Signale 27 zur geschirmten HF-Leitung 21 übertragen.

Eine weitere effiziente Möglichkeit die Diversity-Effizienz zu erhöhen, kann mit einer abgewandelten Form der in Figur 9 angegebenen Anordnung erreicht werden. Diese ist in Figur 10 dargestellt und sieht fest eingestellte Phasendrehglieder 31b, 31c, 31d im eingangsseitigen Signalpfad 39a des Antennenmoduls 22 vor. Aufgrund der nach Betrag und Phase bestehenden Unterschiedlichkeit der Antennen-Richtdiagramme können zu den Richtdiagrammen der Antennen selbst durch paarweise gebildete Kombinationen der Antennensignale weitere zusätzliche 6 unterschiedliche Richtdiagramme im summierten Signal 38 gebildet werden. Die Signale der Einzelantennen sowie die Kombinationen sind durch entsprechende Ansteuerung des adressierbaren Signalwahlschalters 33 über die elektronische Steuereinrichtung mit Speicher 41 gezielt anwählbar. Bei entsprechender Ausgestaltung des Diversityprozessors 37 in Kombination mit der elektronischen Steuereinrichtung mit Speicher 41 kann bezüglich der Signalqualität eine Rankingliste über alle möglichen Einstellungen des adressierbaren Signalwahlschalters 33 erstellt und laufend aktualisiert werden, so dass am Ausgang des Antennenmoduls 22 stets das beste verfügbare Signal-Störverhältnis vorliegt. Hierbei zeigt sich der überraschende Effekt, dass sich für die Phasendrehglieder 31b, 31c, 31d für jede Frequenz jeweils ein fester Winkelwert für die Phasendrehung ermitteln lässt, so dass sich über alle Fahrten in unterschiedlichen durch Mehrwegausbreitung gestörten Rayleigh-Empfangsfeldern mit statistischer Verteilung der einfallenden Wellen nach Größe und Richtung ein statistisch optimaler Wert für die Diversity-Effizienz ergibt. Der besondere Vorteil hierbei ist, dass die Phasendrehglieder 31b, 31c, 31d - auch unter Berücksichtigung der Frequenzabhängigkeit dieser optimalen Phasenwerte - durch einfache L-C-Schaltungen realisiert werden können und der Zugewinn an Diversity-Effizienz mit extrem kleinem Hardware-Aufwand erreicht werden kann. Der erreichbare Zugewinn ist umso größer, je größer die Unterschiedlichkeit der Antennen-Richtdiagramme ist. Deshalb ist es besonders hilfreich, dass erfindungsgemäß neben den Antennen auf einer kleinen Fensterscheibe eine der Antennen als Stabantenne 11 mit ihrem deutlich unterschiedlichen Empfangsverhalten ausgeführt ist.

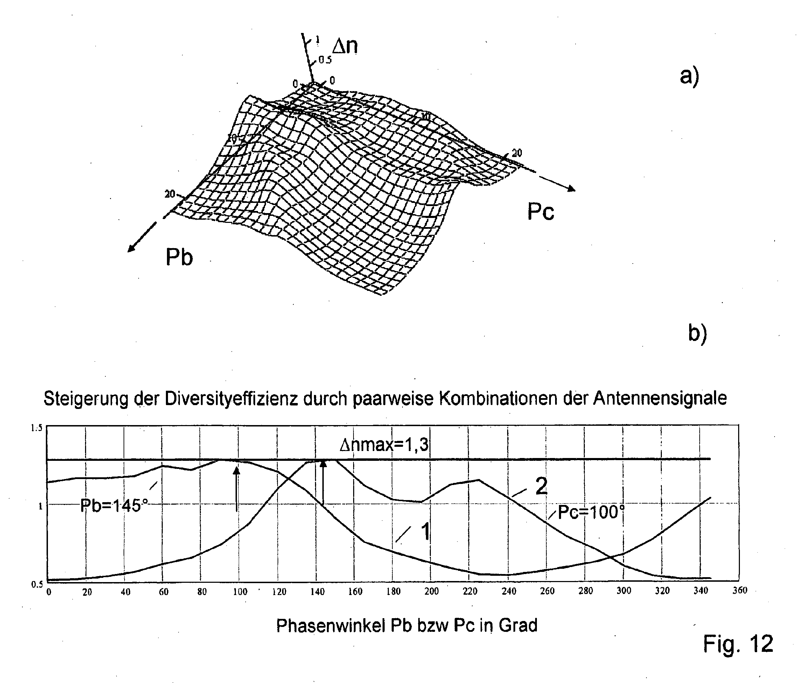

Dies geht eindrucksvoll aus dem folgenden, in der Figur 11 dargestellten Beispiel mit nur drei Antennen hervor. Hierfür sind nur zwei Phasendrehglieder 31b, 31c notwendig. Der adressierbare Signalwahlschalter 33 zum Durchschalten der einzelnen Antennensignale sowie zur Bildung der drei möglichen Kombinationen von Antennensignalen benötigt im Beispiel lediglich vier Dioden. Die Diversity-Effizienz von drei Antennen wurde für ein Beispiel zu n = 2,3 ermittelt. In Figur 12a ist der Zugewinn $\Delta n$ an Diversity-Effizienz in Abhängigkeit von den Phasenwerten $P_b$ und $P_c$ dreidimensional dargestellt. Dabei zeigt sich ein deutlich ausgeprägtes Maximum bei optimaler Wahl der beiden Phasenwerte. Zur Verdeutlichung des Effekts sind in Figur 12b Schnitte durch das Diagramm in Figur 12a dargestellt, welche jeweils den Punkt für maximalen Zugewinn $\Delta n_{max}$ an Diversity-Effizienz beinhalten. Im vorgegebenen Beispiel beträgt $\Delta n_{max}$ = 1,3. Die Wirkung dieses Zugewinns kann für folgende beispielhafte Empfangsituation veranschaulicht werden: In einem Empfangsgebiet, in dem mit einer Einzelantenne die Wahrscheinlichkeit einer Störung 20% beträgt, wird die Störwahrscheinlichkeit ohne Anwendung der gephasten Summation von Signalen auf den Wert von 2,5% abgesenkt. Mit $\Delta n_{max}$ = 1,3 wird diese Störwahrscheinlichkeit aufwandsarm praktisch um eine weitere Größenordnung auf 0,3% verkleinert.

Liste der Bezeichnungen

Kraftfahrzeugfensterscheibe 1
Leitende Fahzeugkarosserie 2
Fahrzeugaussenhaut 2a
Masseanschluss 3
Sammelschiene 4a,b

Heizleiter 5
Antennenleiter (erste Leiterteile) 6a,b,c,d
Leiter 7
Antennenanschlussstelle 8
Antennenanschlusskontakt 8a,8b,8c,8d
Anschlusspunkt 9
Durchkopplung 10
Stabantenne 11
Fensterrand 12
Flächiger leitfähiger Antennenfußpunkt 13
kapazitive Gegenfläche 14
Sammelschienenanschluss 15, 16
Entkopplungsnetzwerke 17
Ausgangsanschluss 20
geschirmte HF-Leitung 21
Antennenmodul 22
Stablänge 23
Leiterplatte 24
Leitende Verbindungen 25
Verbindungsleitung 26
Übertragungsweg für LMK-Signale 27
Antennen-Diversity-Modul 28
Lochdurchkopplung 29
Summationsglied 30
Phasendrehglied 31b, 31c, 31d
Empfangssignal 32a,b
adressierbarer Signalwahlschalter 33
Auswahlschalter 34a, 34b
Erster separater Signalpfad 35
Zweiter separater Signalpfad 36
Diversityprozessor 37
summiertes Ausgangssignal 38
eingangsseitiger Signalpfad 39a
FM-ZF-Signal 40
elektronische Steuereinrichtung mit Speicher 41
logisches Schalt-Einstellsignal 43
Empfänger 44
Phasen-Einstellsignal 45
Störungsanzeigesignal 46
einstellbare Phasendreheinrichtung 47

**Patentansprüche**

1. Diversity-Antennenanordnung für den Rundfunk-Empfang unter Verwendung eines Empfängers (44), umfassend folgende Merkmale:

   es ist für den Empfang für Frequenzen (VHF, UHF) oberhalb des Hochfrequenzbereichs in einer Kraftfahrzeugfensterscheibe (1) in einer elektrisch leitenden Fahrzeugkarosserie zusammen mit einem aufgedruckten Heizfeld mindestens eine erste Antenne gebildet,
   das Heizfeld erstreckt sich bis in die Nähe des oberen Fensterrands (12) und besteht aus horizontal angeordneten Heizleitern (5) und an den seitlichen Rändern des Heizfelds befindlichen Sammelschienen (4a, 4b) zur Zuführung des Heizgleichstroms über hochfrequent isolierende Entkopplungsnetzwerke (17),
die erste Antenne ist durch Anschluss des Heizfelds über einen Leiter (7) zu mindestens einem Antennenanschlusskontakt (8b, 8c, 8d) auf der Kraftfahrzeugfensterscheibe (1) gebildet,
der mindestens eine Anschlusskontakt (8b, 8c, 8d) auf der Kraftfahrzeugfensterscheibe (1) liegt in dem räumlichen Bereich einer Antennenanschlussstelle (8) von mindestens zwei Diversityantennen für Frequenzen (VHF, UHF) oberhalb des Hochfrequenzbereichs und die geometrische Ausdehnung dieser Antennenanschlussstelle (8) ist kleiner als 1/15 der Wellenlänge in diesem Frequenzbereich (VHF, UHF), es ist ein Antennenmodul (22) vorhanden, in welchem sämtliche für die Antennen-Diversity-Funktion notwendigen elektronischen Komponenten enthalten sind und welchem die Empfangssignale von den Antennenanschlusskontakten (8b, 8c, 8d) über Verbindungsleitungen (26) zugeführt sind,
**gekennzeichnet durch die folgenden Merkmal:**

   - für den Empfang von Signalen sowohl im niedrigeren LMK-Frequenzbereich als auch bei Frequenzen (VHF, UHF) oberhalb des Hochfrequenzbereichs ist eine in der Nähe des oberen Fensterrands angebrachte weitere Antenne (11) vorgesehen, die einen Anschlusskontakt (8a) aufweist,
   - die weitere Antenne ist eine auf der Fahrzeugaußenhaut (2a) angebrachte Stabantenne (11) mit dem Antennenanschlusskontakt (8a) im Antennenfußpunkt mit elektrischer Durchkopplung (10) der Empfangssignale in das Fahrzeuginnere,
   - der Antennenanschlusskontakt (8a) der Stabantenne (11) ist mit dem mindestens einen Anschlusskontakt (8b, 8c, 8d) sowie einem Masseanschluss (3) zur metallischen Fahrzeugkarosserie in dem räumlichen Bereich der Antennenanschlussstelle (8) zusammengefasst.
   - innerhalb des Bereichs der Antennenanschlussstelle (8) ist das Antennenmodul (22) vorhanden, in welchem auch sämtliche für die Signalverstärkung in beiden Frequenzbereichen (LMK; VHF, UHF) notwendigen elektronischen Komponenten enthalten sind,
   - das Antennenmodul (22) ist mit dem Masseanschluss (3) verbunden,
   - die Ausgangssignale des Antennenmoduls (22) sind in beiden Frequenzbereichen (LMK; VHF, UHF) über eine geschirmte HF-Leitung (21) dem Empfänger (44) zugeführt, und

- die Stabantenne (11) wird oberhalb des Hochfrequenzbereichs als Diversity-Antenne verwendet.

2. Antenne nach Anspruch 1,
**dadurch gekennzeichnet, dass**
die Stabantenne (11) mit einem flächig leitfähigen Antennenfußpunkt (13) ausgebildet ist welcher auf der Außenfläche der Fensterscheibe (1) angebracht ist und auf der gegenüberliegenden Innenfläche der Fensterscheibe (1) eine kapazitive Gegenfläche (14) gestaltet und mit einem Antennenanschlusskontakt (8a) versehen ist, wodurch eine kapazitive Durchkopplung (10) der Empfangssignale in das Innere des Fahrzeugs gegeben ist.
(Fig. 2)

3. Antenne nach Anspruch 1 und 2 ,
**dadurch gekennzeichnet, dass**
die Antennenanschlussstelle (8) und somit die Stabantenne (11) mit kapazitiver Durchkopplung (10) etwa in der horizontalen Mitte der Fensterscheibe (1) angebracht ist und mindestens eine der beiden Sammelschienen (4a, 4b) als erster Antennenleiter (6a, 6b) verwendet ist und jeweils der zweite Leiterteil (7) im Wesentlichen parallel zum oberen Scheibenrand geführt ist und auf der Innenseite der Fensterscheibe (1) die Antennenanschlusskontakte (8a, 8b,8c bzw. 8d) gebildet sind.
(Fig. 1)

4. Antenne nach Anspruch 1 bis 3,
**dadurch gekennzeichnet, dass**
etwa in der horizontalen Mitte der Fensterscheibe (1) ein erster Antennenleiter (6c) ausgebildet ist und der Kreuzungspunkt des obersten Heizleiters in den Ausdehnungsbereich der Antennenanschlussstelle (8) fällt und dort der Antennenanschlusskontakt (8d) gebildet ist und somit der zweite Antennenleiter (7) dieser Antenne entfällt.
(Fig. 3)

5. Antenne nach Anspruch 1 bis 3,
**dadurch gekennzeichnet, dass**
etwa symmetrisch zur horizontalen Mitte der Fensterscheibe (1) zwei zueinander parallele erste Antennenleiter (6c) geführt sind, welche über zweite Antennenleiter (7) miteinander verbunden sind und gemeinsam mit dem Antennenanschlusskontakt (8d) verbunden sind.
(Fig. 4, 5)

6. Antenne nach Anspruch 1 bis 2,
**dadurch gekennzeichnet, dass**
die Antennenanschlussstelle (8) und somit die Stabantenne (11) mit kapazitiver Durchkopplung (10) in der Nähe einer der.beiden oberen Ecken der Fensterscheibe angebracht ist und mindestens eine der beiden Sammelschienen (4a, 4b) als erster Antennenleiter (6a, 6b) verwendet ist und im Falle der von der Antennenanschlussstelle (8) entfernten Sammelschiene (4a) der zugehörige zweite Leiterteil (7) zur Überbrückung der Entfernung im wesentlichen parallel zum oberen Fensterrand geführt ist und dass im Falle der zur Antennenanschlussstelle (8) nahe gelegenen Sammelschiene (4b), deren oberes Ende im Bereich der Antennenanschlussstelle (8) liegt, der zugehörige Antennenanschlusskontakt (8c) mit der Sammelschiene (4b) leitend verbunden ist.
(Fig. 7)

7. Antenne nach Anspruch 1 bis 6,
**dadurch gekennzeichnet, dass**
das Antennenmodul (22) auf der Innenseite der Fensterscheibe (1) angebracht ist und zwischen den auf die Scheibe gedruckten Antennenanschlusskontakten (8a, 8b, 8c, 8d) und den für die Signalverstärkung in beiden Frequenzbereichen sowie den für die Antennen-Diversity-Funktion notwendigen elektronischen und elektrischen Komponenten leitende Verbindungen (25) hergestellt sind.
(Fig. 2)

8. Antenne nach Anspruch 1 bis 7,
**dadurch gekennzeichnet, dass**
jedoch die Stabantenne (11) auf der Außenfläche der elektrisch leitenden Fahrzeugkarosserie angebracht ist und die Durchkopplung (10) der Empfangssignale in das Innere des Fahrzeugs als Lochdurchkopplung (29) gestaltet ist und ihre Weiterleitung über eine Verbindungsleitung (26) zum Antennenmodul (22) gegeben ist.
(Fig. 8)

9. Antenne nach Anspruch 8,
**dadurch gekennzeichnet, dass**
jedoch das Antennenmodul (22) auf der leitenden Fahrzeugkarosserie (2) angebracht ist und die Empfangssignale für den Frequenzbereich oberhalb des Hochfrequenzbereichs von den auf der Fensterscheibe aufgedruckten Antennenanschlusskontakten (8b, 8c, 8d) über Verbindungsleitungen (26) zum Antennenmodul (22) geleitet sind.
(Fig.8)

10. Antenne nach Anspruch 1 bis 9,
**dadurch gekennzeichnet, dass**
im Antennenmodul (22) ein Antennendiversitymodul (28) mit einer Umschalteinrichtung zur Auswahl eines diversitätsmäßig anderen Empfangssignals und eine Auswerteschaltung vorhanden sind, welche die Qualität des gerade zum Empfänger (44) gelangenden Empfangssignals bewertet, um bei Auftreten von Störungen durch Umschalten ein diversitätsmäßig anderes Empfangssignal zum Empfänger (44) zu führen und weiterhin

- im Antennendiversitymodul (28) durch Aufzweigen des eingangsseitigen Signalpfads (39a) mindestens ein erster und ein zweiter separater Signalpfad (35, 36) vorhanden sind, deren Ausgangssignale den Eingängen eines Summationsglieds (30) zugeführt und in diesem summiert werden, wobei das summierte Signal (38) dem Empfänger (44) über die geschirmte HF-Leitung (21) zugeführt ist,
- jeder der beiden separaten Signalpfade (3 5, 36) eingangsseitig einen adressierbaren logischen Signalwahlschalter (34a, 34b, 33) enthält, der mit den Antennenanschlusskontakten (8a, 8b, 8c, 8d) verbunden ist und mit dessen unterschiedlichen Schaltstellungen jeweils ein diversitätsmäßig unterschiedliches Antennen-Empfangssignal (32a, 32b) zu mindestens einem der beiden Eingänge der separaten Signalpfade (35, 36) geführt wird,
- mindestens einer der Signalpfade (39a, 35, 36) eine in der Phasenwinkeldrehung fest eingestellte Phasendreheinrichtung (47) enthält, mit dem Effekt, dass - wenn bei mindestens einer der Schalterstellungen des adressierbaren logischen Signalwahlschalters (33) das Empfangssignal eines der Antennenanschlusskontakte (8a,8b,8c,8d) zu einem der beiden Eingänge des Summationsgliedes (30) durchgeschaltet ist - das Empfangssignal eines anderen der Antennenanschlusskontakte (8a,8b,8c,8d) um die Phase der fest eingestellten Phasendreheinrichtungen (47) gedreht und zum anderen der beiden Eingänge des Summationsgliedes (30) durchgeschaltet und damit im summierten Signal (38) dem ersten Signal hinzugefügt ist,
- bei Auftreten einer Störung im summierten Signal (38) eine diversitätsmäßig andere koordinierte Einstellung der Schaltstellung des adressierbaren logischen Signalwahlschalters (34a, 34b, 33) gewählt wird.

(Fig. 9,10)

11. Antenne nach Anspruch 10,
**gekennzeichnet durch** die folgenden Merkmale:

- mindestens einer der beiden separaten Signalpfade (35, 36) enthält eine fest eingestellte Phasendreheinrichtung (47), deren fest eingestellter Phasendrehwinkel jeweils **durch** diversitätsmäßiges Umschalten geändert wird,
- das Antennendiversitymodul (28) enthält eingangsseitig einen adressierbaren logischen Signalwahlschalter (33), **durch** dessen unterschiedliche Schaltstellungen jeweils ein diversitätsmäßig unterschiedliches Empfangssignal (32a, 32b) zu mindestens einem der beiden Eingänge der separaten Signalpfade (35, 36) gelangt, wobei ausgangsseitig das summierte Signal (38) zum Empfänger (44) über die geschirmte HF-Leitung (21) geleitet wird,
- das Antennendiversitymodul (28) enthält eine elektronische Steuereinrichtung mit Speicher (41) zum koordinierten Einstellen von diskreten Phasendrehwinkeln Φi der Phasendreheinrichtung (47), die jeweils einer bestimmten Schaltstellung des adressierbaren logischen Signalwahlschalter (33) fest zugeordnet und als Phasenvektor (i = 1, 2,...) im Speicher der elektronischen Steuereinrichtung (41) abgelegt sind, wodurch in der Steuereinrichtung (41) über die unterschiedlichen Schaltstellungen eine Phasenwertematrix von diskreten Phasendrehwinkeln ($\Phi$a,b,i) abgelegt ist,
- bei Auftreten einer Störung im summierten Signal (38) -bei der ein Störungsanzeigesignal (46) zur elektronischen Steuereinrichtung mit Speicher (41) geleitet wird - wird eine diversitätsmäßig andere koordinierte Einstellung der Schaltstellung des adressierbaren logischen Signalwahlschalter (34a, 34b, 33) und des zugeordneten diskreten Phasendrehwinkels $\Phi_{a,b,i}$ gewählt.

(Fig. 9)

12. Antennendiversityanlage nach Anspruch 10,
**dadurch gekennzeichnet, dass**
mindestens ein fest eingestelltes Phasendrehglied (31b, 31c, 31d) in den eingangsseitigen Signalpfad (39a) zur Drehung des Phasenwinkels eines Antennensignals in der Zuleitung zum adressierbaren logischen Signalwahlschalter (33) zur Erhöhung der Diversity-Effizienz eingebunden ist.
(Fig. 10, 11)

13. Antennendiversityanlage nach Anspruch 12,
**dadurch gekennzeichnet, dass**
bei Vorhandensein von 3 Antennenanschlusskontakten (8a,8b,8c) nur zwei fest eingestellte Phasendrehglieder (31b, 31c) in den eingangsseitigen Signalpfad (39a) eingebunden sind, deren Phasendrehwinkel frequenzabhängig für möglichst großen Zuwachs an Diversizyeffizienz - bezogen auf den Wert ohne die gephaste Summation von Empfangssignalen - gewählt sind.
(Fig. 11)

14. Antennendiversityanlage nach Anspruch 1 bis 13
**dadurch gekennzeichnet, dass**
für die Verstärkung und Übertragung von Signalen im Antennenmodul (22) ein gesonderter Übertragungsweg für den Empfang von AM-Signalen (27) gestaltet ist, dessen Eingangssignal aus dem Antennenanschlusskontakt (8a) der Stabantenne (11) bezogen ist und dessen Ausgangssignal der geschirmten HF-Leitung (21) zugeführt ist.
(Fig. 9,10,11)

15. Antennendiversityanlage nach Anspruch 1 bis 14 **dadurch gekennzeichnet, dass**
eine bzw. mehrere Antenne/n aus dem Heizfeld in der Weise gebildet ist bzw. sind, dass jeweils ein aufgedruckter Antennenleiter (6) (erster Leiterteil) vorhanden ist, welcher quer zu den Heizleitern (5) geführt ist und an den Kreuzungspunkten mit den Heizleitern (5) verbunden ist und ein zweiter Teil des aufgedruckten Antennenleiters (zweiter Leiterteil (7)) mit dem zugehörigen ersten Leiterteil (6) leitend verbunden ist und zur Überbrückung der Entfernung zum auf der Fensterscheibe (1) aufgedruckten Antennenanschlusskontakt (8b,8c,8d) im Wesentlichen parallel und möglichst nahe zum leitenden oberen Fensterrand (12) der elektrisch leitenden Fahrzeugkarosserie (2) geführt ist

16. Antenne nach Anspruch 1 bis 6, **dadurch gekennzeichnet, dass**
das Antennenmodul (22) auf der leitenden Fahrzeugkarosserie (2) angebracht ist und die Empfangssignale der Stabantenne (11) und der auf der Fensterscheibe (1) befindlichen Antennen von den auf der Fensterscheibe aufgedruckten Antennenanschlusskontakten (8a, 8b, 8c, 8d) über Verbindungsleitungen (26) zum Antennenmodul (22) geleitet sind.

17. Antenne nach Anspruch 16, **dadurch gekennzeichnet, dass**
die Verbindungsleitungen (26) in der Form einer Mehrfachleitung ausgeführt sind und der Anschluss der Mehrfachleitung an einem Ende mit den Antennenanschlusskontakten (8a, 8b, 8c, 8d) fest verbunden ist und deren anderes Ende mit einer Steckverbindung mit dem Antennenmodul (22) verbunden ist und der Masseanschluss (3) über die mechanische Befestigung des Antennenmoduls (22) an der leitenden Fahzeugkarosserie (2) gegeben ist.

**Claims**

1. Diversity antenna assembly for radio broadcast reception using a receiver (44), comprising the following features:

for reception at frequencies (VHF, UHF) above the high-frequency range, at least a first antenna is formed in a motor vehicle window pane (1) in an electrically conductive vehicle body together with a printed heating field,

the heating field extends to the vicinity of the upper window edge (12) and consists of horizontally arranged heating conductors (5) and bus bars (4a, 4b) at the lateral edges of the heating field for feeding the heating direct current via high frequency insulating decoupling networks (17),
the first antenna is formed by connecting the heating field via a conductor (7) to at least one antenna connection contact (8b, 8c, 8d) at the motor vehicle window pane (1),
said at least one connection contact (8b, 8c, 8d) at the motor vehicle window pane (1) is in the spatial area of an antenna connection point (8) of at least two diversity antennas for frequencies (VHF, UHF) above the high-frequency range and the geometrical extent of said antenna connection point (8) is less than 1/15 of the wavelength in that frequency range (VHF, UHF),
an antenna module (22) is provided in which all required electronic components for the antenna diversity function are included and to which the reception signals from the antenna connection contacts (8b, 8c, 8d) are fed via connection lines (26),
**characterized by** the following features:

- for reception of signals of both in the low LMK frequency range and at frequencies (VHF, UHF) above the high frequency range, a further antenna (11) is provided, mounted in the vicinity of the upper window edge and having a connection contact (8a),
- the further antenna is a rod antenna (11) mounted on the vehicle outer skin (2a) and having the antenna connection contact (8a) in the antenna foot point with electrical through-coupling (10) of the reception signals into the vehicle interior,
- the antenna connection contact (8a) of the rod antenna (11) is combined with said at least one connection contact (8b, 8c, 8d) and a ground connection (3) to the metallic vehicle body in the spatial area of the antenna connection point (8),
- within the area of the antenna connection point (8) the antenna module (22) is provided, in which all required electronic components for the signal amplification in both frequency ranges (LMK; VHF, UHF) are also included,
- the antenna module (22) is connected to the ground connection (3),
- the output signals of the antenna module (22) are fed to the receiver (44) in both frequency ranges (LMK; VHF, UHF) via a shielded RF line (21), and
- the rod antenna (11) is used as diversity antenna above the high frequency range.

**2.** Antenna according to claim 1,
**characterized in that**
said rod antenna (11) comprises a planar conductive antenna foot point (13) that is mounted on the outside surface of the window pane (1) and forms a capacitive counter surface (14) on the opposite inside surface of the window pane (1) and is provided with an antenna connection contact (8a), thereby providing a capacitive through-coupling (10) of said reception signals into the interior of the vehicle. (Fig. 2)

**3.** Antenna according to claim 1 and 2,
**characterized in that**
said antenna connection point (8) and thus said rod antenna (11) with capacitive through-coupling (10) are mounted approximately in the horizontal center region of the window pane (1), and at least one of said two bus bars (4a, 4b) is used as first antenna conductor (6a, 6b), and the respective second conductor part (7) is substantially parallel to the upper window edge, and said antenna connection contacts (8a, 8b, 8c and 8d) are formed on the inside of the window pane (1). (Fig. 1)

**4.** Antenna according to claim 1 to 3,
**characterized in that**
a first antenna conductor (6c) is formed approximately in the horizontal center region of the window pane (1), and the intersection point of the uppermost heating conductor is disposed in the area of said antenna connection point (8), and thereat the antenna connection contact (8d) is formed, and thus the second antenna conductor (7) of that antenna is not necessary. (Fig. 3)

**5.** Antenna according to claim 1 to 3,
**characterized in that**
two first antenna conductors (6c) parallel to each other are arranged approximately symmetrical to the horizontal center of the window pane (1), which are connected to each other by second antenna conductors (7) and are jointly connected to the antenna connection contact (8d). (Fig. 4, 5)

**6.** Antenna according to claim 1 to 2,
**characterized in that**
said antenna connection point (8) and thus said rod antenna (11) with capacitive through-coupling (10) are mounted in the vicinity of one of the two upper corners of the window pane, and at least one of said two bus bars (4a, 4b) is used as first antenna conductor (6a, 6b), and in the case of the bus bar (4a) distant from said antenna connection point (8), the associated second conductor part (7) is arranged substantially parallel to the upper window edge for bridging the distance, and that in the case of the bus bar (4b) close to said antenna connection point (8), whose upper end is in the area of the antenna connection point (8), the associated antenna connection contact (8c) is conductively connected to the bus bar (4b). (Fig. 7)

**7.** Antenna according to claim 1 to 6,
**characterized in that**
said antenna module (22) is mounted to the inside of the window pane (1), and conductive connections (25) are provided between the antenna connector contacts (8a, 8b, 8c, 8d) printed on the window pane and the electronic and electrical components required for signal amplification in both frequency ranges as well as for said antenna diversity function. (Fig. 2)

**8.** Antenna according to claim 1 to 7,
**characterized in that**
said rod antenna (11), however, is mounted on the outer surface of the electrically conductive vehicle body, and the through-coupling (10) of the reception signals into the interior of the vehicle is configured as perforation through-coupling (29), and said reception signals are passed on to the antenna module (22) via a connection line (26). (Fig. 8)

**9.** Antenna according to claim 8,
**characterized in that**
said antenna module (22), however, is mounted on the conductive vehicle body (2), and the reception signals for the frequency range above the high-frequency range are passed from the antenna connection contacts (8b, 8c, 8d) printed onto the window pane to the antenna module (22) via connection lines (26). (Fig. 8)

**10.** Antenna according to claim 1 to 9,
**characterized in that**
within said antenna module (22), an antenna diversity module (28) is provided having a switching device for selecting a different reception signal, in terms of diversity, and an evaluation circuit for evaluating the quality of the reception signal just reaching said receiver (44) to pass, by means of switching, a different reception signal, in terms of diversity, to said receiver (44) if interference occurs, and further

    - within said antenna diversity module (28), at least a first and a second separate signal path (35, 36) are provided by branching the input-side signal path (39a), whose output signals are fed to the inputs of a summation element (30) and are summed thereat, wherein the summed signal (38) is fed to the receiver (44) via the shielded RF line (21),
    - each of the two separate signal paths (35, 36) includes an addressable logical signal selection switch (34a, 34b, 33) at the input side, connected to the antenna connector contacts (8a, 8b, 8c, 8d) and with its different switching positions a respective different antenna reception signal (32a, 32b), in terms of diversity, is passed to at least one of the two inputs of said separate signal paths (35, 36);

- at least one of said signal paths (39a, 35, 36) includes a phase rotation device (47) having a fixed setting of a phase angle rotation, with the effect that - if the reception signal of one of said antenna connection contacts (8a, 8b, 8c, 8d) is switched through to one of the two inputs of said summation element (30) in at least one of the switch settings of the addressable logical signal selection switch (33),

- the reception signal of another of said antenna connection contacts (8a, 8b, 8c, 8d) is rotated by the phase of said phase rotation device (47) with the fixed setting, and switched through to the other of the two inputs of the summation element (30), and thereby added to the first signal in the summed signal (38),

- in the event of an interference in the summed signal (38), a different, in terms of diversity, coordinated setting of the switching position of said addressable logical signal selection switch (34a, 34b, 33) is selected. (Fig. 9, 10)

11. Antenna according to claim 10, **characterized by** the following features:

- at least one of the two separate signal paths (35, 36) includes a phase rotation device (47) having a fixed setting, whose fixed phase rotation angle is each changed by diversity switching,

- said antenna diversity module (28) includes an addressable logical signal selection switch (33) at the input side, by means of its different switching positions a respective different reception signal (32a, 32b), in terms of diversity, reaches at least one of the two inputs of the separate signal paths (35, 36), wherein on the output side the summed signal (38) is passed to the receiver (44) via the shielded RF line (21),

- said antenna diversity module (28) includes an electronic control device having memory (41) for coordinated setting of discrete phase rotation angles $\Phi i$ of said phase rotation device (47), which respectively are assigned in a fixed manner to a specific switching position of the addressable logical signal selection switch (33) and stored in the memory of the electronic control device (41) as phase vector (i = 1, 2, ...), thereby causing a phase value matrix of discrete phase rotation angles ($\Phi a$, b, i) to be stored in the control device (41) by way of the different switching positions,

- in the event of an interference in the summed signal (38) - at which an interference indication signal (46) is passed to said electronic control device with memory (41), - a different coordinated setting, in terms of diversity, of the switching position of the addressable logical signal selection switch (34a, 34b, 33) and of the associated discrete phase rotation angle $\Phi_{a,b,i}$ is selected. (Fig. 9)

12. Antenna diversity system according to claim 10, **characterized in that** at least one phase rotation element (31 b, 31 c, 31 d) with fixed setting is included in the input-side signal path (39a) for rotating the phase angle of an antenna signal in the feed line to the addressable logical signal selection switch (33), to increase the diversity efficiency. (Fig. 10, 11)

13. Antenna diversity system according to claim 12, **characterized in that** in the presence of three antenna connection contacts (8a, 8b, 8c), only two phase rotation elements (31b, 31c) with fixed setting are included in said input-side signal path (39a), whose phase rotation angles are selected depending on frequency for greatest possible increase in diversity efficiency - in relation to the value without the phased summation of reception signals. (Fig. 11)

14. Antenna diversity system according to claim 1 to 13, **characterized in that** for amplification and transmission of signals in said antenna module (22), a separate transmission path for the reception of AM signals (27) is configured, the input signal of which is obtained from said antenna connection contact (8a) of said rod antenna (11), and the output signal of which is passed to said shielded RF line (21). (Fig. 9, 10, 11)

15. Antenna diversity system according to claim 1 to 14, **characterized in that** one or more antenna(s) is/are formed from the heating field such that in each case a printed antenna conductor (6) (first conductor portion) is provided, which is arranged crosswise to said heating conductors (5) and connected to said heating conductors (5) at the intersection points, and a second part of the printed antenna conductor (second conductor portion (7)) is conductively connected to said associated first conductor part (6) and is arranged substantially parallel and as close as possible to the conductive upper window edge (12) of the electrically conductive vehicle body (2), to bridge the distance to the antenna connection contact (8b, 8c, 8d) printed onto the window pane (1).

**16.** Antenna according to claim 1 to 6,
**characterized in that**
said antenna module (22) is mounted on the conductive vehicle body (2), and the reception signals of the rod antenna (11) and of said antennas provided on the window pane (1) are passed from said antenna connection contacts (8a, 8b, 8c, 8d) printed on the window pane to said antenna module (22) via connection lines (26).

**17.** Antenna according to claim 16,
**characterized in that**
said connection lines (26) are provided in the form of a multiple line, and the terminal of the multiple line is firmly connected to the antenna connection contacts (8a, 8b, 8c, 8d) at one end, and its other end is connected to a plug connection with said antenna module (22), and said ground connection (3) is provided by the mechanical attachment of said antenna module (22) to said conductive vehicle body (2).

**Revendications**

**1.** Agencement d'antenne en diversité pour la réception de radiodiffusion en utilisant un récepteur (44), comprenant les éléments techniques suivants :

pour la réception pour des fréquences (VHF, UHF) au-dessus de la gamme des hautes fréquences, dans une vitre de fenêtre (1) d'un véhicule automobile dans une carrosserie d'automobile conductrice de l'électricité, il est formé au moins une première antenne conjointement avec un champ de chauffage imprimé, le champ de chauffage s'étend jusqu'au voisinage de la bordure supérieure (12) de la fenêtre et est constitué de conducteurs chauffants (5) agencés horizontalement et de rails collecteurs (4a, 4b) qui se trouvent au niveau des bordures latérales du champ de chauffage pour l'amenée du courant continu de chauffage via des réseaux de découplage isolants vis-à-vis des hautes fréquences (17),
la première antenne est formée en connectant le champ de chauffage via un conducteur (7) à au moins un contact de connexion d'antenne (8b, 8c, 8d) sur la vitre de fenêtre (1) du véhicule automobile,
ledit au moins un contact de connexion (8b, 8c, 8d) est situé sur la vitre de fenêtre (1) dans la zone géographique d'un emplacement de connexion d'antenne (8) d'au moins deux antennes en diversité pour des fréquences (VHF, UHF) au-dessus de la gamme des hautes fréquences et l'extension géométrique de cet emplacement de connexion d'antenne (8) est inférieure à 1/15 de la longueur d'onde dans cette gamme de fréquences (VHF, UHF),
il est prévu un module d'antenne (22) dans lequel sont contenus la totalité des composants électroniques nécessaires pour la fonction en diversité de l'antenne et auxquels sont amenés les signaux de réception provenant des contacts de connexion d'antenne (8b, 8c, 8d) via des lignes de liaison (26),
**caractérisée par** les caractéristiques suivantes :

- pour la réception de signaux aussi bien dans la gamme des basses fréquences LMK que pour des fréquences (VHF, UHF) au-dessus de la gamme des hautes fréquences, il est prévu une autre antenne (11), montée au voisinage de la bordure supérieure de la fenêtre, qui comporte un contact de connexion (8a),
- l'autre antenne est une antenne-tige (11) montée sur la peau extérieure du véhicule (2a) avec le contact de connexion d'antenne (8a) dans le pied de l'antenne avec un couplage électrique traversant (10) des signaux de réception vers l'intérieur du véhicule,
- le contact de connexion d'antenne (8a) de l'antenne-tige (11) est groupé avec ledit au moins un contact de connexion (8b, 8c, 8d) ainsi qu'avec une connexion de masse (3) vers la carrosserie métallique du véhicule dans la zone géométrique de l'emplacement de connexion d'antenne (8),
- le module d'antenne (22) est présent à l'intérieur de la région de l'emplacement de connexion d'antenne (8), module dans lequel sont contenus la totalité des composants électroniques nécessaires pour l'amplification des signaux dans les deux gammes de fréquences (LMK; VHF, UHF),
- le module d'antenne (22) est relié avec la connexion de masse (3),
- les signaux de sortie du module d'antenne (22) sont amenés au récepteur (44) dans les deux gammes de fréquences (LMK ; VHF, UHF) via une ligne HF blindée (21), et
- l'antenne-tige (11) est utilisée comme antenne en diversité au-dessus de la gamme des hautes fréquences.

**2.** Antenne selon la revendication 1,
**caractérisée en ce que**
l'antenne-tige (11) est réalisée avec un pied d'antenne conducteur plan qui est monté sur la surface extérieure de la vitre de fenêtre, et sur la surface intérieure opposée de la vitre de fenêtre (1) il est réalisé une surface antagoniste capacitive (14) dotée d'un contact de connexion d'antenne (8a), grâce à quoi il existe un couplage capacitif traversant (10) des signaux de réception vers l'intérieur du véhicule. (Figure 2).

3. Antenne selon la revendication 1 et 2, **caractérisée en ce que**
l'emplacement de connexion d'antenne (8) et ainsi l'antenne-tige (11) sont montés avec un couplage traversant capacitif (10) approximativement au milieu horizontal de la vitre de fenêtre (1), et l'un au moins des deux rails collecteurs (4a, 4b) est utilisé comme premier conducteur d'antenne (6a, 6b), et la seconde partie conductrice respective (7) est menée sensiblement parallèlement à la bordure supérieure de la vitre, et les contacts de connexion d'antenne (8a, 8b, 8c, respectivement 8d) sont formés sur la face intérieure de la vitre de fenêtre (1). (Figure 1).

4. Antenne selon les revendications 1 à 3, **caractérisée en ce que**
un premier conducteur d'antenne (6c) et réalisé approximativement au milieu horizontal de la vitre de fenêtre (1), et le point de croisement du conducteur chauffant le plus haut tombe dans la zone d'extension de l'emplacement de connexion d'antenne (8), et le contact de connexion d'antenne (8d) est formé à cet endroit, et le second conducteur d'antenne (7) de cette antenne est par conséquent omis. (Figure 3).

5. Antenne selon les revendications 1 à 3, **caractérisée en ce que**
deux premiers conducteurs d'antenne (6c) sont menés approximativement symétriquement au milieu horizontal de la vitre de fenêtre (1), lesquels sont reliés l'un à l'autre via des seconds conducteurs d'antenne (7) et sont reliés conjointement avec le contact de connexion d'antenne (8d). (Figures 4, 5).

6. Antenne selon les revendications 1 et 2, **caractérisée en ce que**
l'emplacement de connexion d'antenne (8) et ainsi l'antenne-tige (11) est monté avec un couplage traversant capacitif (10) au voisinage de l'un des deux coins supérieurs de la vitre de fenêtre, et l'un au moins des deux rails collecteurs (4a, 4b) est utilisé comme premier conducteur d'antenne (6a, 6b) et, dans le cas du rail collecteur (4a) éloigné de l'emplacement de connexion d'antenne (8), la seconde partie de conducteur (7) associée est menée, pour combler l'éloignement, sensiblement parallèlement à la bordure supérieure de la fenêtre, et, dans le cas du rail collecteur (4b) situé à proximité de l'emplacement de connexion d'antenne (8), dont l'extrémité supérieure est située dans la région de l'emplacement de connexion d'antenne (8), le contact de connexion d'antenne (8c) associé est relié de façon conductrice avec le rail collecteur (4b). (Figure 7).

7. Antenne selon les revendications 1 à 6, **caractérisée en ce que**
le module d'antenne (22) est monté sur la face inférieure de la vitre de fenêtre (1), et des liaisons conductrices (25) sont réalisées entre les contacts de connexion d'antenne (8a, 8b, 8c, 8d) imprimés sur la vitre et les composants électroniques et électriques nécessaires pour l'amplification des signaux dans les deux gammes de fréquences ainsi que pour la fonction de diversité de l'antenne. (Figure 2).

8. Antenne selon les revendications 1 à 7, **caractérisée en ce que**
l'antenne-tige (11) est montée sur la surface extérieure de la carrosserie électriquement conductrice du véhicule, et le couplage traversant (10) des signaux de réception vers l'intérieur du véhicule est conçu comme un couplage traversant un trou (29), et la transmission des signaux est réalisée par une ligne de liaison (26) vers le module d'antenne (22). (Figure 8.)

9. Antenne selon la revendication 8, **caractérisée en ce que**
le module d'antenne (22) est monté sur la carrosserie conductrice (2) du véhicule et les signaux de réception pour la gamme de fréquence au-dessus de la gamme des hautes fréquences sont menés depuis les contacts de connexion d'antenne (8b, 8c, 8d) imprimés sur la vitre de fenêtre via des lignes de liaison (26) vers le module d'antenne (22). (Figure 8)

10. Antenne selon les revendications 1 à 9, **caractérisée en ce que**
dans le module d'antenne (22) il est prévu un module de diversité d'antenne (28) avec un système de commutation pour la sélection d'un autre signal de réception en termes de diversité, et un circuit d'évaluation qui évalue la qualité du signal de réception parvenant actuellement au récepteur (44) et, en cas d'apparition de perturbations, pour amener par commutation au récepteur (44) un autre signal de réception en termes de diversité, et dans laquelle

- dans le module de diversité d'antenne (28), par ramification du trajet des signaux (39a) du côté entrée, il existe au moins un premier et un second trajet de signaux séparés (35, 36), dont les signaux de sortie sont amenés aux entrées d'un circuit de sommation (30) et sont additionnés dans celui-ci, et le signal de somme (38) est amené au récepteur (44) via la ligne HF blindée (21),
- chacun des deux trajets de signaux séparés (35, 36) contient du côté entrée un commutateur de sélection de signaux (34a, 34b, 33) logique adressable, qui est relié avec les contacts de connexion d'antenne (8a, 8b, 8c, 8d) et, au moyen des positions de commutation différentes de celui-ci, un signal de réception d'antenne (32a, 32b) respectivement différent en termes de diversité est amené à l'une au moins des deux entrées des trajets de signaux séparés (35, 36),

- l'un au moins des trajets de signaux (39a, 35, 36) contient un système de rotation de phase (47) réglé de façon fixe quant à la rotation angulaire de phase, avec pour effet que, quand pour l'une au moins des positions de commutation du commutateur de sélection de signaux (33) logique adressable le signal de réception de l'un des contacts de connexion d'antenne (8a, 8b, 8c, 8d) est envoyé à l'une des deux entrées du circuit de sommation (30), le signal de réception d'un autre des contacts de connexion d'antenne (8a, 8b, 8c, 8d) est tourné de la phase des systèmes de rotation de phase (47) réglés de façon fixe et est envoyé à l'autre des deux entrées du circuit de sommation (30), et est par conséquent ajouté au premier signal dans le signal de somme (38),

- lors de l'apparition d'une perturbation dans le signal de somme (38) un autre réglage coordonné, en termes de diversité, de la position de commutation du commutateur de sélection de signaux (34a, 34b, 33) logique adressable est sélectionné. (Figures 9, 10).

11. Antenne selon la revendication 10,
**caractérisée par** les caractéristiques suivantes :

- au moins un des deux trajets de signaux séparés (35, 36) contient un système de rotation de phase (47) réglé de manière fixe, dont l'angle de rotation de phase réglé de manière fixe est modifié respectivement par commutation en termes de diversité,
- le module de diversité d'antenne (28) contient du côté entrée un commutateur de sélection de signaux (33) logique adressable, de sorte que les positions de commutation différentes de celui-ci amènent respectivement un signal de réception (32a, 32b) différent en termes de diversité à l'une au moins des deux entrées des trajets de signaux séparés (35, 36), et le signal de somme (38) est amené du côté sortie au récepteur (44) via la ligne HF blindée (21),
- le module de diversité d'antenne (28) contient un système de commande électronique avec une mémoire (41) pour régler de façon coordonnée des angles de rotation de phase discrets $\Phi i$ du système de rotation de phase (47), qui sont associés de manière fixe respectivement à une position de commutation déterminée du commutateur de sélection de signaux (33) logique adressable et sont mémorisés sous forme de vecteurs de phase (i = 1, 2,...) dans la mémoire du système de commande électronique (41), grâce à quoi une matrice de valeurs de phase d'angles de rotation de phase discrets ($\Phi a,b,1$) est mémorisée dans le système de commande (41) via les différences positions de commutation,

- en cas d'apparition d'une perturbation dans le signal de somme (38), pour laquelle un signal indicateur de perturbation (46) est amené au système de commande électronique avec mémoire (41), un autre réglage coordonné, en termes de diversité, de la position de commutation du commutateur de sélection de signaux (34a, 34b, 33) logique adressable et de l'angle de rotation de phase discret $\Phi a,b,i$ associé est sélectionné. (Figure 9).

12. Installation de diversité d'antenne selon la revendication 10,
**caractérisée en ce que**
au moins un circuit de rotation de phase réglé de façon fixe (31b, 31c, 31d) est intégré dans le trajet de signaux (39a) du côté entrée pour faire tourner l'angle de phase d'un signal d'antenne dans la ligne d'arrivée vers le commutateur de sélection de signaux (33) logique adressable pour augmenter l'efficacité de diversité. (Figures 10, 11)

13. Installation de diversité d'antenne selon la revendication 12,
**caractérisée en ce que**
en présence de trois contacts de connexion d'antenne (8a, 8b, 8c), seuls deux circuits de rotation de phase réglés de façon fixe (31b, 31c) sont intégrés dans le trajet de signaux (39a) du côté entrée, dont l'angle de rotation de phase est sélectionné, en fonction de la fréquence pour une croissance aussi élevée que possible de l'efficacité en diversité, par référence à la valeur sans la sommation phasée de signaux de réception. (Figure 11)

14. Installation de diversité d'antenne selon les revendications 1 à 13,
**caractérisée en ce que**
pour l'amplification et la transmission de signaux dans le module d'antenne (22), une voie de transmission particulière est conçue pour la réception de signaux AM (27), dont le signal d'entrée est tiré du contact de connexion d'antenne (8a) de l'antenne-tige (11), et dont le signal de sortie est amené à la ligne HF blindée (21). (Figures 9, 10, 11).

15. Installation de diversité d'antenne selon les revendications 1 à 14,
**caractérisée en ce que**

une ou plusieurs antennes du champ de chauffage est/sont formée(s) de telle manière qu'un conducteur d'antenne (6) imprimé (première partie conductrice) est présent, qui est mené perpendiculairement au conducteur chauffant (5) et qui est relié au conducteur chauffant (5) au niveau des points de croisement, et une seconde partie du conducteur d'antenne imprimé (seconde partie conductrice (7)) est reliée de façon conductrice avec la première partie conductrice associée (6) et, pour combler l'éloignement jusqu'au contact de connexion d'antenne (8b, 8c, 8d) imprimé sur la vitre de fenêtre (1), elle est menée sensiblement parallèlement et la plus proche possible de la bordure de fenêtre supérieure conductrice (12) de la carrosserie électriquement conductrice (2) du véhicule.

16. Antenne selon les revendications 1 à 6,
**caractérisée en ce que**
le module d'antenne (22) est monté sur la carrosserie conductrice (2) du véhicule et les signaux de réception de l'antenne-tige (11) et des antennes qui se trouvent sur la vitre de fenêtre (1) sont menés depuis les contacts de connexion d'antenne (8a, 8b, 8c, 8d) imprimés sur la vitre de fenêtre via des lignes de liaison (26) jusqu'au module d'antenne (22).

17. Antenne selon la revendication 16,
**caractérisée en ce que**
les lignes de liaison (26) sont réalisées sous la forme d'une ligne multiple, et la connexion de la ligne multiple à une extrémité est fermement reliée avec les contacts de connexion d'antenne (8a, 8b, 8c, 8d), et son autre extrémité est reliée au moyen d'une connexion enfichable avec le module d'antenne (22), et la connexion de masse (3) est établie via la fixation mécanique du module d'antenne (22) sur la carrosserie conductrice (2) du véhicule.

Fig. 1

EP 1 968 156 B1

Fig. 2

2a

11

23

2

13

8

21

3

14

10

22

8b

2a

24

25

1

EP 1 968 156 B1

18

Fig. 3

EP 1 968 156 B1

Fig. 4

Horizontale Heizleiter 5
mit dazu quer verlaufenden Antennenleitern 6 u.
Sammelschienen 4a, 4b

EP 1 968 156 B1

Fig. 5

EP 1 968 156 B1

Fig. 6

EP 1 968 156 B1

Fig. 7

Fig. 8

Fig. 9

Fig. 10

EP 1 968 156 B1

Fig. 11

EP 1 968 156 B1

a)

b)

Steigerung der Diversityeffizienz durch paarweise Kombinationen der Antennensignale

Phasenwinkel Pb bzw Pc in Grad

Fig. 12

EP 1 968 156 B1

**EP 1 968 156 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3618452 A1
- DE 3719692 A1
- DE 3914424 C2
- DE 3618452
- US 5581264 A
- WO 9514354 A
- WO 9429926 A